# EUROPEAN PATENT SPECIFICATION

(11) **EP 3 914 065 B1**
(45) Date of publication and mention of the grant of the patent: **06.03.2024**
(21) Application number: 20705110.3
(22) Date of filing: 22.01.2020
(51) Int. Cl.: A01G 9/033, A01G 27/06, E04D 11/00

(54) **MODULAR PANEL FOR GREEN ROOFS**
MODULARES PANEEL ZUR HERSTELLUNG EINES GRÜNDACHS
PANNEAU MODULAIRE POUR FORMER UNE TOITURE VÉGÉTALISÉE

(30) Priority: 24.01.2019 IT 201900001095
(43) Date of publication of application: 01.12.2021
(73) Proprietor: Daku Italia S.r.l., 30027 San Donà di Piave (VE) (IT)
(72) Inventor: FANTIN, Marino, 30027 San Donà di Piave (IT)
(74) Representative: Pozzato, Matteo
(86) International application number: PCT/IB2020/050498
(87) International publication number: WO 2020/152602

(56) References cited:
- WO-A1-2011/033463
- WO-A1-2012/050529
- US-A1- 2016 108 621

## Description

### TECHNICAL SECTOR

The present invention relates to the sector of roof gardens. In particular, the present invention relates to a modular panel for forming a roof garden, in particular on buildings with flat or inclined roofing.

### BACKGROUND ART

Roof gardens exist in many different types and forms, ranging from extensive roof gardens typically covering large areas, where the garden acts as an environmental protective barrier, requires little maintenance and is composed mainly of varieties of sedum and perennial plants, to roof gardens, where lawn areas and trees of various sizes may be used.

The numerous technologies existing on the market have made the construction of roof gardens increasingly simpler and more efficient even in extreme environmental conditions, such as buildings characterized by inclined roofs, intemperate climates and severe constraints in terms of thickness and weight. Nowadays the systems for roof gardens comprise different structural components. Firstly these systems comprise modular elements which are designed to be arranged on a supporting structure, such as a floor slab, and configured to contain sedum vegetation or perennial plants.

These modular elements are generally in the form of panels or containers which are mainly made of moulded polyethylene to be placed on already existing floors.

Generally, these known panels may be characterized by a structure which defines a first region configured to act as a water collection zone suitable for feeding from below the soil containing the plants, and a second region, arranged above the first region and separated from it by a support surface or panel, configured to contain the cultivation soil for growth of the plants. Moreover, the known panels may comprise hollow, breathable or absorbent elements, which are generally arranged so as to connect the first region and second region and configured to transport the water from the second region to the first region, for example by means of capillarity.

The known systems for roof gardens, for example that described in patent application WO2010031104A1 or US2016108621 A1, nevertheless have a number of drawbacks and disadvantages.

Firstly, the known systems have the disadvantage of a limited choice and/or arrangement of the types of vegetation to be used.

In fact, they generally exclude the use of medium-sized shrubs and large-sized trees nor do they allow the use of plants which have different daily water requirements.

More specifically, in the panels comprising elements configured for capillary rise of the water from the water reserve zone, plants which have a large water requirement may be placed only in those points where the said elements configured for capillary rise of the water are located. In other words, in the known panels, during use, differently irrigated zones are created within the plant growing soil depending on the position of the elements configured for capillary rise of the water within the panel itself.

Expressed in yet other words, also owing to the material from which they are made, the known panels are characterized by non-homogeneous and nonuniform irrigation of the plant growing soil.

Secondly, the known systems are suitable mainly for flat roofs and have particular drawbacks in the case where the surface to be covered is inclined. For example, for installations on inclined roofs, the known panels require the creation of multiple terracing which makes the installation of an irrigation system for plants particularly difficult or disadvantageous.

Moreover, the supply of water and nutrients to the plants is varied depending on the position of the panel on the inclined roof.

The known systems also supply the water necessary for survival of the vegetation by means of conventional sprinkler irrigation systems. These systems do not favour the deep growth of the roots of the plants, result in a high water loss due to evaporation and favour the propagation of plant diseases.

### SUMMARY

In this situation there exists an urgent need to provide a modular panel for forming a roof garden which is able to satisfy the correct daily water requirement for different types of vegetation including that on inclined roofs. The task of the present invention is therefore that of proposing a modular panel for forming a roof garden suitable for the growth of different types of plants.

In connection with this task it is an object of the present invention to provide a modular panel for a roof garden which allows the growth of different plants which have different water requirements.

A further object is to propose a modular panel for forming a roof garden suitable for being installed on inclined surfaces.

Another object of the present invention is to provide a modular panel for forming a roof garden in which the water needed for survival of the vegetation is supplied from below.

A further object of the invention is to propose a modular panel for forming a roof garden which is able to optimize the water supply to the plants planted in it, in particular by promoting the deep growth of their roots.

This task as well as the objects described above are achieved by a modular panel for forming a roof garden according to the attached independent claim 1.

Advantageous aspects of a modular panel for forming a roof garden are indicated in the attached dependent claims.

The said claims are incorporated herein for the purpose of specific reference. The modular panel for forming a roof garden according to the present invention comprises a bottom and external walls which delimit a compartment configured to contain a liquid and means for feeding a liquid into said compartment.

The modular panel further comprises a support layer, configured to support soil, and an operative element, protruding or projecting from the bottom and having a distal end with respect to said bottom which defines a support for the support layer.

In other words, the support layer for supporting the soil is supported, inside the compartment defined by the bottom and by the external walls, by this operative element.

Expressed in yet other words, the operative element separates or keeps spaced from each other the bottom and the support layer.

More specifically, the operative element is configured so as to draw the liquid from the bottom towards the distal end of the operative element so as transfer the liquid to the support layer.

The latter is also configured so as to spread through it the liquid received from the operative element towards the soil.

In other words, the operative element and the support layer are configured to draw the liquid contained in the compartment and to spread in a substantially uniform manner in the soil.

Advantageously, therefore, the modular panel has a special feature in the fact that it has an operative element which promotes:
- rising of the water from a water accumulation zone, or compartment, of the panel towards the plant growing soil and
- diffusion of the same water from a support layer able to spread uniformly the water rising from the compartment of the panel, in a horizontal or radial direction.

According to the invention, the operative element of the modular panel according to the present invention comprises a first and a second riser element. Said first and second operative riser elements have the capacity of drawing the liquid from the bottom in a varying capacity.

This results in the possibility of cultivating various plant species, with water requirements different from each other, in different zones of the modular panel depending on the position, in the modular panel, and the liquid drawing capacity of said first and second riser elements.

According to an embodiment of the present invention, the first riser element is configured to draw one litre of water per day.

As a result, according to this preferred aspect, the first riser element is able to satisfy the daily water requirement of sedum plants.

According to the present invention, the first riser element is integral with the bottom of the modular panel.

Therefore, the modular panel and the first riser element form a single part and may be formed as one piece, or joined together, for example by means of moulding.

The second riser element may be configured so that the modular panel has a capacity for drawing water, from the bottom to soil placed on the support layer 40, overall equal to at least 5 litres per day.

Consequently, according to this aspect, the modular panel is able to satisfy the water requirement for a lawn.

The first riser element may comprise at least one internal wall which defines a sub-compartment of the compartment of the modular panel.

Consequently, the compartment of the modular panel may comprise at least one sub-compartment.

Preferably, the modular panel comprises a plurality of internal walls which define a plurality of sub-compartments which extend substantially parallel to each other and which are in communication with each other.

In other words, the compartment of the modular panel is divided into various sub-compartments or sectors.

Consequently, these sub-compartments allow the installation of the modular panel according to the present invention on inclined roofs.

The modular panel may comprise at least one seat, located in a sub-compartment, configured to house the second riser element.

Consequently, the second riser element is preferably an element not integral with the bottom of the modular panel.

Advantageously, therefore, the modular panel may comprise a number of second riser elements which varies depending on the plants to be grown in the modular panel.

In other words, the second riser elements allow the formation of a modular panel, the capacity of which for drawing liquid from the bottom of this panel to the soil may be personalized according to needs.

According to a preferred aspect, the seat configured to house the second riser element is a depression in the sub-compartment and the portions of the latter, adjacent to said seat, are configured to promote conveying of the liquid towards said seat.

Consequently, the liquid contained in the sub-compartments is favourably conveyed towards the seats and, consequently, towards the second riser elements in order to favour conveying of the said liquid towards the support layer.

According to a further preferred aspect, the modular panel has a substantially rectangular form.

Moreover, the panel may have a rectangular form and comprises preferably a main rib which extends between the two shorter sides so as to divide the panel itself into an upper zone and a lower zone with respect to the main rib.

The modular panel according to the present disclosure may comprise a secondary rib which extends between the two longer sides of the said modular panel so as to subdivide each of said upper zone and said lower zone into a first lateral zone and into a second lateral zone with respect to the secondary rib.

In other words, the modular panel is divided into two or more sectors by the main rib and/or by the secondary rib.

Advantageously, this division into sectors prevents the dispersion of the liquid towards the zone of the panel situated downstream when the panel itself is installed on inclined roofs.

In other words, the main rib and the secondary rib prevent the outflow of the liquid from one sector to the other in the event of installation of the panel on surfaces which are not flat.

Moreover, according to a further preferred aspect, the means for feeding the liquid into the compartment of the modular panel comprise a main pipe housed in the main rib and a secondary pipe housed in the secondary rib and connected to the main pipe.

Consequently, the pipes favour spreading of the liquid in the whole of the compartment, or in all of the sub-compartments, of a modular panel.

Moreover, the pipes of a panel for feeding the liquid into the compartment may be easily connected to pipes of other panels and/or to a source of this liquid. These means for feeding the liquid into the compartment allow the plants to survive even during long periods of dry weather.

According to a preferred aspect of the present invention, the main rib comprises a liquid collection tank.

This collection tank is configured to collect the liquid from the secondary pipe and distribute it, or convey it towards, the compartment and/or a sub-compartment.

Consequently, therefore, and differently from the known systems, the modular panel according to the present invention allows the liquid necessary for growth of the plants to be supplied from below.

This favours, in particular, the deep growth of the roots, less wastage of water due to evaporation and less risk of the spreading of diseases affecting the plant leaves.

### BRIEF DESCRIPTON OF THE DRAWINGS

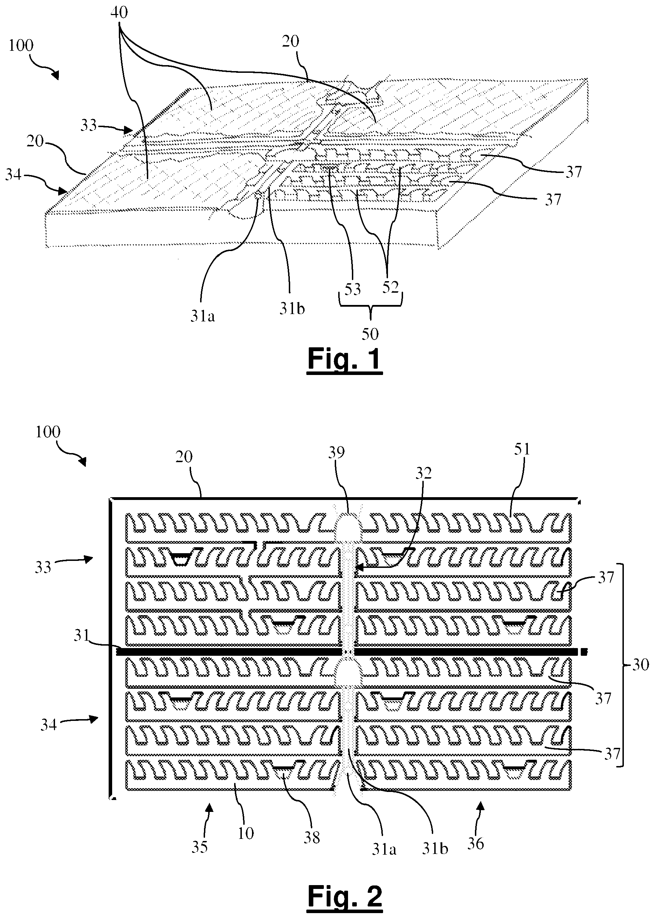

Figure 1 shows a perspective view of a modular panel according to the present invention;
Figure 2 shows a view, from above, of a modular panel according to the present invention;

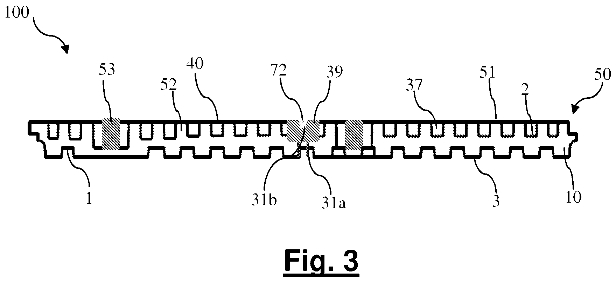

Figure 3 shows a cross-sectional view of a modular panel according to the present invention.

### DETAILED DESCRIPTION

With particular reference to the attached figures, these show, by way of a nonlimiting example, a modular panel for forming a roof garden, according to the invention, denoted overall by 100.

"Modular panel" is understood as meaning within the context of the present disclosure a panel configured to be installed for example on roofs of buildings and designed to be joined together with other panels substantially of the same type so as to form a roof garden.

The modular panel 100 comprises, in a manner conventional per se, a bottom 10 and external walls 20. The bottom 10 and the external walls 20 delimit or define a compartment 30 configured to contain a liquid. Preferably, this liquid is supplied by means 70 for feeding the liquid of the modular panel 100.

More specifically, the bottom 10 defines a first surface 1, or lower surface, intended, during use, to face the ground or the roof of a building, and a second surface 2, or upper surface, facing the compartment 30 of the modular panel 100. Preferably, the modular panel 100 comprises feet 3 which are attached to or integral with the bottom 10 of the modular panel 100, in particular with the first surface 1, or lower surface, of the bottom 10 of the modular panel 100. These feet 3 keep the bottom 10 of the modular panel 100 separate from the ground or from the roof on which the panel itself 100, during use, is installed, thus favouring the drainage of the rainwater. Moreover, according to a preferred embodiment, the feet 3 are integral with the bottom 10 of the modular panel 100. Even more preferably, the feet 3 are made of the same material from which the bottom 10 is made. Consequently, the bottom 10 and the feet 3 may be made as one piece or joined together, for example by means of moulding. Preferably, the modular panel 100 has a substantially rectangular form and comprises a main rib 31 which extends between the two shorter sides of the said modular panel 100 and a secondary rib 32 which extends between the two longer sides of the modular panel 100. In particular, the main rib 31 subdivides the said modular panel 100, in particular the compartment 30, into an upper zone 33 and a lower zone 34 with respect to said main rib 31. The secondary rib 32 then subdivides this upper zone 33 and this lower zone 34 of the modular panel 100 into a first lateral zone 35 and into a second lateral zone 36 with respect to the secondary rib 32. In other words, the main rib 31 and the secondary rib 32 divide up the compartment 30 of the modular panel 100 into sectors. In this way, if the modular panel 100 is installed on an inclined surface, the liquid contained in the compartment 30 does not flow out entirely towards the portion of the modular panel 100 situated downstream of the slope of the inclined surface.

The modular panel 100 according to the present invention furthermore comprises a support layer 40 for supporting soil suitable for growing plants and an operative element 50 protruding or projecting from the bottom 10 of the said modular panel. More specifically, during use, the support layer 40 is a layer substantially parallel to the bottom 10 of the modular panel 100 or to the roof on which the modular panel 100 rests by means of the feet 3, while the operative element 50 projects from the second surface 2, or upper surface, of the bottom 10. This operative element 50 comprises a distal end 51 with respect to said bottom 10 which defines a bearing area, or support, for the support layer 40. In other words, the operative element 50 distances, or separates, the bottom 10 of the modular panel 100, in particular its second surface 2, or upper surface, from the support layer 40. Expressed in yet other words, the support layer 40 is supported inside the compartment 30 defined by the bottom 10 and by the external walls 20 by this operative element 50.

The operative element 50 is also configured to draw the liquid from the bottom 10 towards its distal end 51 on which the support layer 40 rests. In other words, the operative element 50 is configured to cause the liquid to rise, for example by means of capillarity action, from the bottom 10 of the modular panel 100, in particular from the second surface 2, as far as its distal end 51. Expressed yet differently again, the operative element 50 allows the liquid to be transported from the bottom of the modular panel 100 to the support layer 40. Preferably, the operative element 50 is able to convey one litre of water per day from the bottom 10 of the panel 100 to its distal end 51.

The support layer 40 is configured so as to spread through it the liquid received from the operative element 50 towards the soil. More particularly, the support layer 40 is configured to promote the diffusion of the liquid reaching the distal end 51 of the operative element 50 preferably in all directions so as to wet or moisten, preferably uniformly, the soil supported by the support layer 40. Consequently the operative element 50 promotes rising, preferably along a substantially vertical direction, of the liquid from the bottom 10 of the modular panel 100, which acts as a liquid reserve, to the support layer 40, while the latter is configured to promote the diffusion through itself of the liquid so as to wet or moisten uniformly the soil part which rests on the said support layer 40. In other words, the support layer 40 spreads, mainly horizontally, the liquid reaching the distal end 51 of the operative element 50 in the soil. The latter is preferably a soil based on lava lapilli or in any case comprising spongey material configured to favour rising of the water from the support layer 40. Preferably, the latter is a non-woven fabric.

The operative element 50 of the modular panel 100 comprises a first riser element 52 and a second riser element 53 having varying capacities for drawing the liquid from the bottom 10. Preferably, the liquid drawing capacity of the second riser element 53 is greater than that of the first riser element 52.

The first riser element 52 is integral with, or formed as one piece with, the bottom 10 of the modular panel 100. Even more preferably, the bottom 10 and the first riser element 52 are made of expanded polystyrene able to allow rising towards the distal end 51 of one litre of water per day.

According to a preferred embodiment, the second riser element 53 is configured so that the modular panel 100 has an overall liquid rising capacity of at least 5 litres per day.

"Rising capacity" is understood as meaning generally the capacity to draw water, especially from the bottom 10 to soil placed on the support layer 40. With a rising capacity of at least 5 litres per day, the modular panel 100 will for example be able to perform daily irrigation sufficient to grow a lawn.

Clearly, depending on the particular requirements, the modular panel 100 may be configured to ensure a rising capacity of at least 10 litres per day, for example able to satisfy the irrigation needs of plants which require such a quantity of water.

Obviously, a modular panel according to the present invention may be supplied with a daily quantity of water less than its daily rising capacity so as to be able to provide irrigation surfaces commensurate with the actual requirements of the plants arranged on it.

In other words, the sum of the liquid rising capacity of the first and second riser elements 53 will be preferably at least 5 litres per day and optionally at least 10 litres per day, as mentioned above.

Preferably, the second riser element 53 consists of an open-cell phenolic foam. This allows a second riser element 53 to be made in a simple and low-cost manner.

The second riser element 53 may be an oblong element having a proximal end which, during use, may face or be directed towards the bottom 10 of the modular panel 100 and a distal end 54 which may be configured to support, during use, the support layer 40.

According to an embodiment, the distal end 54 of the second riser element 53 is designed with dimensions so that it is located at a greater distance from the bottom 10 than the distal end 54 of the first riser element 52. This dimensional design favours the maximum flow of liquid from the bottom 10 to the support layer 40, the second riser elements 53 being preferably those which have the greatest liquid drawing capacity.

The second riser element 53 is preferably an element separate from the bottom 10 of the modular panel 100. In other words, the second riser element 53 is an element which, during use, is connected to the bottom 10 of the modular panel 100 so as to vary the overall liquid drawing capacity of the panel. This allows the cultivation of plants characterized by varied water requirements. Preferably, the modular panel 100 comprises a plurality of second riser elements 53. In particular, the number of second riser elements 53 in the modular panel 100 may vary depending on the plant species which are to be cultivated.

More specifically, the second riser element 53 is housed inside specific seats 38 of the modular panel 100.

In particular, according to one embodiment, the operative element 50, and in particular the first riser element 52 of the operative element 50, comprises a plurality of internal walls which define at least one sub-compartment 37 inside the compartment 30 of the modular panel 100. Said sub-compartment 37 is configured to act as a liquid reservoir for feeding the plants of the modular panel 100. In other words, the internal walls of the first riser element 52 divide the compartment 30 of the modular panel 100 preferably into a plurality of sub-compartments 37. These sub-compartments 37 allow the installation of the modular panel 100 on inclined surfaces. In fact, the sub-compartments 37 prevent the drainage of the liquid in the direction of the slope of the inclined surface.

According to one embodiment, said sub-compartments 37 extend substantially parallel to one another and communicate with each other. Preferably the modular panel 100, during use, is installed so that, in the event of a sloping surface, the main direction of extension of the sub-compartments 37 is substantially perpendicular to the slope of the surface.

According to one embodiment, these sub-compartments 37 preferably have the form of a half-fishbone. This form allows, in the case of installation of the modular panel 100 on an inclined surface, the formation of liquid accumulation zones which favour the accumulation of the said liquid before it is drawn from the bottom 10 towards the distal end 51 of the operative element 50.

According to a preferred aspect, the seat 38 for housing the second riser elements 53 is located inside a sub-compartment 37. More specifically, such a seat 38 may be a depression of the sub-compartment 37 configured to act as a source of liquid for a second riser element 53. Preferably, moreover, the portions of the sub-compartment 37 adjacent to this seat 38 are configured to promote the conveying of the liquid towards said seat 38. In other words, each of said sub-compartments 37 may have a slope configured to channel the liquid towards a seat 38. In order to improve further the flow of this liquid towards a seat 38, according to a further embodiment, various sub-compartments 37 may be placed in communication with each other so as to convey the liquid towards a second riser element 53.

The modular panel 100 also comprises means 70 for feeding the liquid into the compartment 30 of the said modular panel 100. Preferably, these means 70 for feeding the liquid comprise a main pipe 71 and a secondary pipe 72 connected to the main pipe 71. In other words, the liquid feeding means comprise a main feed duct with branched sections configured to convey the liquid into different zones of one or more adjacent modular panels 100. More specifically, the main pipe 71 is configured to establish fluid connections between one or more modular panels 100 and a supply source. The secondary pipe 72 is instead configured to distribute the liquid transported by the main pipe 71 into the compartment 30 of a modular panel 100. Preferably, the secondary pipe 72 distributes the liquid transported by the main pipe 71 to the lower zone 34 and to the upper zone 33 of a modular panel 100 in relation to the main rib 31. According to a preferred embodiment, the main pipe 71 is housed inside the main rib 31 of a modular panel 100, while the secondary pipe 72 is housed inside the secondary rib of the same modular panel 100. Consequently, in the case where the modular panel 100 is installed on an inclined surface, the secondary pipe 72 is arranged substantially in the direction of the slope of this surface, while the main pipe 71 is arranged substantially perpendicular to the secondary pipe 72. Preferably, the main and secondary ribs 31, 32 comprise a seat configured to house, respectively, the main pipe and the secondary pipe 72.

Even more preferably, the secondary rib 32 comprises a liquid collection tank 39 configured to collect the liquid from the secondary pipe 72 and distribute it to the compartment 30 of the modular panel 100. More specifically, the collection tank 39 is configured to distribute the liquid to the sub-compartments 37 of the modular panel 100. As already mentioned, said sub-compartments 37 are then configured to favour conveying of the liquid towards the second riser elements 53.

Preferably, the modular panel 100 comprises a collection tank 39 for each of said upper and lower zones 33, 34 of the said panel. Preferably, moreover, this collection tank 39 is positioned inside the modular panel 100 so that, if the panel is installed on an inclined surface, it is situated in an upstream portion of said upper and lower zones 33, 34. Advantageously, therefore, conveying of the liquid towards the second riser elements 53 is favoured.

Preferably, the collection basin 39 is a depression in said secondary rib 32. According to a preferred embodiment, the bottom of said depression is located at a smaller height than the second surface 2, or upper surface, of the bottom 10 of the modular panel 100. In this way, the liquid from the secondary pipe 72 is stored inside said collection tank 39 until the top surface 2 of the bottom 10 is reached. This dimensional design favours, during use, once this height has been reached and exceeded, the spilling over of the liquid inside the sub-compartments 37 which in turn promote conveying of this liquid towards the second riser elements 53.

According to a preferred embodiment, the secondary pipe 72 comprises drip systems configured to cause the fluid to flow from this secondary pipe 72 to this collection tank 39. Preferably, the flowrate of these drip systems is variable. According to this aspect, different portions of the modular panel 100 may be fed differently from each other by means of drip systems with a different flowrate depending on the water requirement of the plants which are to be grown in said panel portions.

The main rib also comprises a drainage channel 31a configured to perform drainage outside the compartment 30 of the modular panel 100. In other words, the drainage channel 31a causes the outflow of liquid from the compartment 30 if this liquid exceeds a given height inside the said compartment 30 or inside a sub-compartment 30. Preferably, this drainage channel 31a is an opening, or a hole, configured to connect a sub-compartment 30 to the first surface 1, or lower surface, of the bottom 10 of the modular panel 100. Preferably, the drainage channel 31a is located adjacent to the distal end 51 of the operative element 50.

According to a further aspect, the secondary rib 32 also comprises a housing 31b configured to receive the secondary pipe 72. In other words, the secondary rib 32 comprises a seat, or a passage, on which the secondary pipe 72 is placed. Preferably, this housing 31b is a recess, or a channel, in the secondary rib 32. Even more preferably, the housing 31b is configured to accommodate entirely the secondary pipe 72 so that the latter does not project outside the said housing.

The subject of the present disclosure has been described hitherto with reference to its embodiments. It is to be understood that there may exist other embodiments. The scope of the invention is defined by the appended claims.

## Claims

1. Modular panel (100) for forming a roof garden comprising:
- a bottom (10) and external walls (20) which delimit a compartment (30) configured to contain a liquid;
- a support layer (40) for supporting soil;
- an operative element (50) projecting from the bottom (10) and having a distal end (51) with respect to said bottom (10), where said distal end (51) defines a support for said support layer (40);
- means (70) for feeding a liquid into said compartment (30), wherein said means (70) for feeding the liquid comprise a main pipe (71);
wherein the operative element (50) is configured in such a way as to draw a liquid from the bottom (10) towards said distal end (51) so as to transfer the liquid to said support layer (40) and wherein said support layer (40) is configured to spread through itself the liquid received from said operative element (50), so as to irrigate the soil,
and wherein the operative element (50) comprises a first riser element (52) and a second riser element (53), wherein said first and second riser elements (52, 53) have different liquid drawing capacities, **characterised in that** the means (70) for feeding the liquid further comprise a secondary pipe (72) connected to said main pipe (71) and **in that** the first riser element (52) is integral with the bottom (10).

2. Modular panel (100) according to claim 1, wherein the first riser element (52) is configured in such a way that, by means of it, said modular panel (100) has a capacity to draw liquid, from said bottom (10) to soil placed on said support layer (40), substantially equal to 1 litre of water per day.

3. Modular panel (100) according to claim 2, wherein the second riser element (53) is configured in such a way that the modular panel (100) has a water drawing capacity, from said bottom (10) to soil placed on said support layer (40), substantially equal to at least 5 litres per day.

4. Modular panel (100) according to any one of claims 2 or 3, wherein the first riser element (52) comprises a plurality of internal walls which define a plurality of sub-compartments (37) in the compartment (30).

5. Modular panel (100) according to the preceding claim, comprising a plurality of sub-compartments (37), wherein said sub-compartments (37) extend substantially parallel to each other and are in communication with each other.

6. Modular panel (100) according to claim 4 or 5, comprising a seat (38) configured to house said second riser element (53), wherein said seat (38) is located in a sub-compartment (30).

7. Modular panel (100) according to the preceding claim, wherein said seat (38) is a depression provided in said sub-compartment (37) and wherein the portions of the sub-compartment (37) adjacent to said seat (38) are configured to promote conveying of the liquid towards said seat (38).

8. Modular panel (100) according any one of the preceding claims, wherein said modular panel (100) is substantially rectangular in shape and comprises a main rib (31) which extends between the two shorter sides of the modular panel (100) so as to divide the modular panel (100) itself into an upper zone (33) and into a lower zone (34) with respect to said main rib (31).

9. Modular panel (100) according to the preceding claim, comprising a secondary rib (32) which extends between the two longer sides of the modular panel (100) so as to subdivide each of said upper zone (33) and lower zone (34) of the modular panel (100) into a first lateral zone (35) and into a second lateral zone (36) with respect to the secondary rib (32).

10. Modular panel (100) according to claim 9, wherein the means (70) for feeding the liquid comprise a main pipe (71) housed in said main rib (31) and a secondary pipe (72) connected to said main pipe (71) housed in said secondary rib (32).

11. Modular panel (100) according to the preceding claim, wherein said main rib (31) comprises a collection tank (39) for the liquid, configured to collect the liquid coming from a drip system of said secondary pipe (72) and to distribute it to the compartment (30) of the modular panel (100).

12. Modular panel (100) according to any one of the preceding claims 8 to 11, wherein said secondary rib (32) further comprises a drainage channel (31a) configured to discharge liquid outside said compartment (30) and a housing (31b) configured to accommodate the secondary pipe (72).

## Patentansprüche

1. Modulares Paneel (100) zur Bildung eines Dachgartens, aufweisend:
- einen Boden (10) und Außenwände (20), die eine Kammer (30) begrenzen, welche dafür ausgelegt ist, eine Flüssigkeit zu enthalten;
- eine Tragschicht (40) zur Unterstützung eines Erdbodens;
- ein Funktionselement (50), das vom Boden (10) vorsteht und in Bezug auf den Boden (10) ein distales Ende (51) hat, wobei das distale Ende (51) eine Unterstützung für die Tragschicht (40) definiert;
- - Einrichtungen (70) zum Einleiten einer Flüssigkeit in die Kammer (30), wobei die Einrichtungen (70) zum Einleiten der Flüssigkeit ein Hauptrohr (71) aufweisen;
wobei das Funktionselement (50) so ausgelegt ist, dass eine Flüssigkeit vom Boden (10) zum distalen Ende (51) gesaugt wird, um die Flüssigkeit zur Tragschicht (40) weiterzuleiten, und wobei die Tragschicht (40) dafür ausgelegt ist, die vom Funktionselement (50) erhaltene Flüssigkeit durch sich selbst hindurch zu verteilen, um den Erdboden zu bewässern,
und wobei das Funktionselement (50) ein erstes Steigleitungselement (52) und ein zweites Steigleitungselement (53) aufweist, wobei das erste und zweite Steigleitungselement (52, 53) ein jeweils anderes Flüssigkeitsansaugvermögen haben,
**dadurch gekennzeichnet, dass** die Einrichtungen (70) zum Einleiten der Flüssigkeit darüber hinaus ein mit dem Hauptrohr (71) verbundenes Sekundärrohr (72) aufweisen und das erste Steigleitungselement (52) integral mit dem Boden (10) ist.

2. Modulares Paneel (100) nach Anspruch 1, wobei das erste Steigleitungselement (52) so ausgelegt ist, dass es dem modularen Paneel (100) die Fähigkeit verleiht, Flüssigkeit vom Boden (10) zu dem auf der Tragschicht (40) platzierten Erdboden zu saugen, und zwar im Wesentlichen in Höhe von 1 Liter Wasser pro Tag.

3. Modulares Paneel (100) nach Anspruch 2, wobei das zweite Steigleitungselement (53) so ausgelegt ist, dass das modulare Paneel (100) eine Wassersaugfähigkeit vom Boden (10) zu dem auf der Tragschicht (40) platzierten Erdboden im Wesentlichen in Höhe von mindestens 5 Liter pro Tag hat.

4. Modulares Paneel (100) nach einem der Ansprüche 2 oder 3, wobei das erste Steigleitungselement (52) eine Vielzahl von Innenwänden hat, die eine Vielzahl von Teilkammern (37) in der Kammer (30) definieren.

5. Modulares Paneel (100) nach dem vorhergehenden Anspruch, mit einer Vielzahl von Teilkammern (37), wobei sich die Teilkammern (37) im Wesentlichen parallel zueinander erstrecken und miteinander in Verbindung stehen.

6. Modulares Paneel (100) nach Anspruch 4 oder 5, mit einer Aufnahme (38), die dafür ausgelegt ist, das zweite Steigleitungselement (53) unterzubringen, wobei sich die Aufnahme (38) in einer Teilkammer (30) befindet.

7. Modulares Paneel (100) nach dem vorhergehenden Anspruch, wobei die Aufnahme (38) eine in der Teilkammer (37) vorgesehen Vertiefung ist und die Abschnitte der Teilkammer (37), die an die Aufnahme (38) angrenzen, dafür ausgelegt sind, die Beförderung der Flüssigkeit zur Aufnahme (38) zu unterstützen.

8. Modulares Paneel (100) nach einem der vorhergehenden Ansprüche, wobei das modulare Paneel (100) eine im Wesentlichen rechteckige Formgebung hat und einen Hauptsteg (31) aufweist, der sich zwischen den zwei kürzeren Seiten des modularen Paneels (100) erstreckt, um das modulare Paneel (100) selbst in eine obere Zone (33) und eine untere Zone (34) in Bezug auf den Hauptsteg (31) aufzuteilen.

9. Modulares Paneel (100) nach dem vorhergehenden Anspruch, mit einem Sekundärsteg (32), der sich zwischen den zwei längeren Seiten des modularen Paneels (100) erstreckt, um die obere Zone (33) und untere Zone (34) des modularen Paneels (100) jeweils in eine erste seitliche Zone (35) und eine zweite seitliche Zone (36) in Bezug auf den Sekundärsteg (32) zu unterteilen.

10. Modulares Paneel (100) nach Anspruch 9, wobei die Einrichtungen (70) zum Einleiten der Flüssigkeit ein in dem Hauptsteg (31) untergebrachtes Hauptrohr (71) und ein mit dem Hauptrohr (71) verbundenes Sekundärrohr (72) aufweisen, das in dem Sekundärsteg (32) untergebracht ist.

11. Modulares Paneel (100) nach dem vorhergehenden Anspruch, wobei der Hauptsteg (31) einen Sammeltank (39) für die Flüssigkeit aufweist, der dafür ausgelegt ist, die von einem Tropfsystem des Sekundärrohrs (72) kommende Flüssigkeit zu sammeln und sie auf die Kammer (30) des modularen Paneels (100) zu verteilen.

12. Modulares Paneel (100) nach einem der vorhergehenden Ansprüche 8 bis 11, wobei der Sekundärsteg (32) darüber hinaus einen Ablaufkanal (31a), der dafür ausgelegt ist, Flüssigkeit aus der Kammer (30) auszuleiten, und ein Gehäuse (31b) aufweist, das dafür ausgelegt ist, das Sekundärrohr (72) aufzunehmen.

## Revendications

1. Panneau modulaire (100) pour former un jardin sur un toit, comprenant :
un fond (10) et des parois externes (20) qui délimitent un compartiment (30) configuré pour contenir un liquide ;
une couche de support (40) pour supporter de la terre ;
un élément opérationnel (50) faisant saillie du fond (10) et ayant une extrémité distale (51) par rapport audit fond (10), où ladite extrémité distale (51) définit un support pour ladite couche de support (40) ;
des moyens (70) pour alimenter un liquide dans ledit compartiment (30), dans lequel lesdits moyens (70) d'alimentation de liquide comprennent un tuyau principal (71) ;
dans lequel l'élément opérationnel (50) est configuré pour aspirer un liquide du fond (10) vers ladite extrémité distale (51) afin de transférer le liquide vers ladite couche de support (40) et dans lequel ladite couche de support (40) est configurée pour diffuser à travers elle-même le liquide reçu dudit élément opérationnel (50), afin d'irriguer la terre,
et dans lequel l'élément opérationnel (50) comprend un premier élément de remontée (52) et un second élément de remontée (53), dans lequel lesdits premier et second éléments de remontée (52, 53) ont des capacités d'aspiration de liquide différentes,
**caractérisé en ce que** les moyens (70) d'alimentation de liquide comprennent en outre un tuyau secondaire (72) raccordé audit tuyau principal (71) et **en ce que** le premier élément de remontée (52) est solidaire avec le fond (10).

2. Panneau modulaire (100) selon la revendication 1, dans lequel le premier élément de remontée (52) est configuré de sorte que, au moyen de ce dernier, ledit panneau modulaire (100) a une capacité pour aspirer le liquide, dudit fond (10) à la terre placée sur ladite couche de support (40), sensiblement égale à 1 litre d'eau par jour.

3. Panneau modulaire (100) selon la revendication 2, dans lequel le second élément de remontée (53) est configuré de sorte que le panneau modulaire (100) a une capacité d'aspiration d'eau, dudit fond (10) à la terre placée sur ladite couche de support (40), sensiblement égale à au moins 5 litres par jour.

4. Panneau modulaire (100) selon l'une quelconque des revendications 2 ou 3, dans lequel le premier élément de remontée (52) comprend une pluralité de parois internes qui définissent une pluralité de sous-compartiments (37) dans le compartiment (30).

5. Panneau modulaire (100) selon la revendication précédente, comprenant une pluralité de sous-compartiments (37), dans lequel lesdits sous-compartiments (37) s'étendent sensiblement parallèlement entre eux et sont en communication entre eux.

6. Panneau modulaire (100) selon la revendication 4 ou 5, comprenant un siège (38) configuré pour loger ledit second élément de remontée (53), dans lequel ledit siège (38) est positionné dans un sous-compartiment (30).

7. Panneau modulaire (100) selon la revendication précédente, dans lequel ledit siège (38) est une dépression prévue dans ledit sous-compartiment (37) et dans lequel les parties du sous-compartiment (37) adjacentes audit siège (38) sont configurées pour favoriser le transport du liquide vers ledit siège (38).

8. Panneau modulaire (100) selon l'une quelconque des revendications précédentes, dans lequel ledit panneau modulaire (100) a une forme sensiblement rectangulaire et comprend une nervure principale (31) qui s'étend entre les deux côtés plus courts du panneau modulaire (100) afin de diviser le panneau modulaire (100) lui-même en une zone supérieure (33) et en une zone inférieure (34) par rapport à ladite nervure principale (31).

9. Panneau modulaire (100) selon la revendication précédente, comprenant une nervure secondaire (32) qui s'étend entre les deux côtés plus longs du panneau modulaire (100) afin de diviser chacune parmi ladite zone supérieure (33) et la zone inférieure (34) du panneau modulaire (100) en une première zone latérale (35) et en une seconde zone latérale (36) par rapport à la nervure secondaire (32).

10. Panneau modulaire (100) selon la revendication 9, dans lequel les moyens (70) d'alimentation de liquide comprennent un tuyau principal (71) logé dans ladite nervure principale (31) et un tuyau secondaire (72) raccordé audit tuyau principal (71) logé dans ladite nervure secondaire (32).

11. Panneau modulaire (100) selon la revendication précédente, dans lequel ladite nervure principale (31) comprend un réservoir de collecte (39) pour le liquide, configuré pour collecter le liquide provenant d'un système de goutte-à-goutte dudit tuyau secondaire (72) et pour le distribuer au compartiment (30) du panneau modulaire (100).

12. Panneau modulaire (100) selon l'une quelconque des revendications 8 à 11, dans lequel ladite nervure secondaire (32) comprend en outre un canal de drainage (31a) configuré pour décharger le liquide à l'extérieur dudit compartiment (30) et un logement (31b) configuré pour loger le tuyau secondaire (72).
